# EUROPEAN PATENT APPLICATION

(11) **EP 4 691 886 A1**
(43) Date of publication of application: **11.02.2026**
(21) Application number: 24830947.8
(22) Date of filing: 28.06.2024
(51) Int. Cl.: B62D 21/02, B62D 21/10, B62D 25/20, B62D 53/06, B60K 1/04, B60L 50/60

(54) **VEHICLE FRAME BODY, BOX BEAM TYPE VEHICLE FRAME ASSEMBLY, AND VEHICLE**

(30) Priority: 30.06.2023 CN 202310803455
(71) Applicant: University of Sanya, Sanya, Hainan 572022 (CN); Zhejiang Geely Holding Group Co., Ltd., Hangzhou, Zhejiang 310051 (CN)
(72) Inventor: LI, Shufu, Sanya, Hainan 572022 (CN)
(74) Representative: Michalski Hüttermann & Partner Patentanwälte mbB
(86) International application number: PCT/CN2024/102269
(87) International publication number: WO 2025/002316

(57) **Abstract**

A vehicle frame body, a box beam type vehicle frame assembly, and a vehicle are provided. The vehicle frame body includes a longitudinal box beam (10) and a top plate (20). The longitudinal box beam (10) and the top plate (20) are of an integrally formed structure. The longitudinal box beam (10) is connected to the lower surface of the top plate (20), and the longitudinal box beam (10) and the top plate (20) enclose to form a hollow cavity (30) for accommodating a vehicle-mounted component. The present application meets the requirements of high efficiency and light weight of commercial vehicles.

## Description

### CROSS-REFERENCE TO RELATED APPLICATION

This application claims priority to Chinese Patent Application No. 202310803455.6, filed with the China Patent Office on June 30, 2023, the entire contents of which are incorporated herein by reference.

### TECHNICAL FIELD

The embodiments of the present application relate to, but are not limited to, the field of vehicle technologies, and in particular to, but not limited to, a vehicle frame body, a box beam type vehicle frame assembly, and a vehicle.

### BACKGROUND

Influenced by carbon neutrality policies and trends, commercial vehicles have increasingly higher requirements for fuel economy, which places higher demands on the lightweighting of commercial vehicles. Currently, one direction is to replace steel with aluminum to reduce the overall vehicle mass while meeting strength requirements, thereby achieving lightweighting and satisfying fuel economy needs.

### SUMMARY

Below is a summary of the subject matters described in detail herein. The summary is not intended to limit the protection scope of the claims.

According to a first aspect of the embodiments of the present application, there is provided a vehicle frame body, including a longitudinal box beam and a top plate; where the longitudinal box beam and the top plate are a profile integrated structure by extrusion molding; the longitudinal box beam is connected to a lower surface of the top plate, and the longitudinal box beam and the top plate enclose to form a hollow cavity for accommodating vehicle-mounted components.

In some embodiments, the longitudinal box beam includes a bottom beam and two side beams, an end of each of the two side beams is connected to the bottom beam, and the other end of the side beam is connected to the top plate.

In some embodiments, the two side beams are symmetrically arranged on both sides of the bottom beam in a transverse direction; the transverse direction is perpendicular to a longitudinal direction of the hollow cavity.

In some embodiments, a cross-section of each of the two side beams in the longitudinal direction has at least a portion that is arc-shaped and concaved towards an interior of the hollow cavity.

In some embodiments, a cross-section of the hollow cavity in the longitudinal direction is quadrilateral, or the cross-section of the hollow cavity in the longitudinal direction is trapezoidal, and a length of an upper base of the trapezoid is greater than a length of a lower base of the cross-section of the hollow cavity.

In some embodiments, an upper top surface of the top plate is provided with a protrusion portion extending longitudinally, the protrusion portion is provided with a mounting portion for mounting a cargo box or a cargo box side panel; and/or
the upper top surface of the top plate is provided with the protrusion portion extending longitudinally, and the longitudinal box beam, the top plate, and the protrusion portion are an extruded-and-integrally formed structure.

In some embodiments, in the transverse direction, a thickness of the top plate gradually decreases from middle towards both sides, the transverse direction being perpendicular to the longitudinal direction of the hollow cavity.

In some embodiments, the longitudinal box beam and the top plate are both made of an aluminum alloy material.

In some embodiments, the longitudinal box beam and the top plate are solid structures;
or, the longitudinal box beam and the top plate are longitudinally hollow multi-hole structures.

According to a second aspect of the embodiments of the present application, there is provided a box beam type vehicle frame, including at least two vehicle frame bodies according to the first aspect connected horizontally in a transverse direction;
where top plates of the at least two vehicle frame bodies are connected into one continuous structure, or, the at least two vehicle frame bodies are a profile integrated structure extrusion molding;
longitudinal box beams of the at least two vehicle frame bodies are arranged spaced apart in the transverse direction.

In some embodiments, a bottom portion of the at least two vehicle frame bodies is provided with a first accommodating structure, the first accommodating structure is suspended below the at least two longitudinal box beams, and both ends of the first accommodating structure in the transverse direction are respectively connected to the top plate, and enclose to form a first accommodating cavity.

In some embodiments, a bottom portion of each of the at least two longitudinal box beams is individually provided with a second accommodating structure and a second accommodating cavity, both ends of the second accommodating structure are respectively connected to a bottom portion of the top plate on both sides of the longitudinal box beam in the transverse direction.

In some embodiments, the bottom portion of the at least two vehicle frame bodies is provided with a third accommodating structure, both ends of the third accommodating structure are respectively connected to side beams of two longitudinal box beams facing middle of the top plate; and the third accommodating structure, the side beams of the at least two longitudinal box beams, and the top plate form the third accommodating cavity.

In some embodiments, a bottom portion of the top plate is provided with a fourth accommodating structure, both ends of the fourth accommodating structure are respectively connected to side beams of the at least two longitudinal box beams facing edges of the top plate and the top plate, and the fourth accommodating structure, the side beam of the longitudinal box beam facing the edge of the top plate, and the top plate constitute a fourth accommodating cavity.

In some embodiments, a bottom portion of the top plate is symmetrically provided with two fifth accommodating structures and fifth accommodating cavities in a transverse direction, and respectively located beside two longitudinal box beams.

In some embodiments, an interior of the top plate is provided with a plurality of wire harness holes or pipeline arrangement holes in the longitudinal direction.

According to a third aspect of the embodiments of the present application, there is provided a box beam type vehicle frame, including at least three vehicle frame bodies according to the first aspect;
longitudinal box beams and top plates of the at least three vehicle frame bodies are connected into one continuous structure in a transverse direction, or the at least three vehicle frame bodies are a profile integrated structure by extrusion molding.

In some embodiments, for each longitudinal box beam, the longitudinal box beam includes a bottom beam and two side beams, an end of each of the two side beams is connected to the bottom beam, and the other end of the side beam is connected to the top plate; two adjacent longitudinal box beams share one side beam;
where, two side beams located outermost are symmetrically arranged; or
at least one side beam is arc-shaped and concaved towards an interior of the hollow cavity.

According to a fourth aspect of the embodiments of the present application, there is provided a box beam type vehicle frame assembly, including at least one vehicle frame body according to the first aspect.

In some embodiments, the vehicle frame assembly further includes a cabin support beam, where the cabin support beam is connected to a longitudinal box beam of the at least one vehicle frame body in the longitudinal direction.

In some embodiments, the cabin support beam and the at least one vehicle frame body are a profile integrated structure by extrusion molding, and the cabin support beam is a structure formed by partially removing a top plate and a part of a longitudinal box beam at a front section of the box beam type vehicle frame assembly.

In some embodiments, the cabin support beam is a profile integrated structure by extrusion molding and is connected to the longitudinal box beam via a connector.

According to a fifth aspect of the embodiments of the present application, there is provided a box beam type vehicle frame assembly, including the box beam type vehicle frame according to the second aspect, where the box beam type vehicle frame constitutes a bearing portion of the vehicle frame assembly, and a goose-neck portion is further provided at a front section of the bearing portion.

In some embodiments, the goose-neck portion is a profile integrated structure by extrusion molding.

In some embodiments, the goose-neck portion is a steel structure, and the steel structure is connected to the bearing portion via standard connectors.

According to a sixth aspect of the embodiments of the present application, there is provided a box beam type vehicle frame assembly, including a front frame, a middle frame, and a rear frame; where the middle frame is constituted by the box beam type vehicle frame according to the third aspect.

In some embodiments, the front frame is a structure formed by partially removing a top plate and a part of a longitudinal box beam at a front section of the box beam type vehicle frame;
the rear frame is a structure formed by partially removing a top plate and a part of a longitudinal box beam at a rear section of the box beam type vehicle frame.

In some embodiments, the front frame and the rear frame are made of steel material, and the middle frame is made of aluminum alloy material.

In some embodiments, the middle frame further includes cover plates for covering a front opening and a rear opening.

According to a seventh aspect of the embodiments of the present application, there is provided a vehicle, being a trailer or a semi-trailer, provided with the vehicle frame assembly according to the fifth aspect.

According to an eighth aspect of the embodiments of the present application, there is provided a vehicle, being a light truck, provided with the vehicle frame assembly according to the fourth aspect.

According to a ninth aspect of the embodiments of the present application, there is provided a vehicle, being a heavy truck, provided with the vehicle frame assembly according to the sixth aspect.

The technical solutions provided by the embodiments of the present application may include the following beneficial effects.

The vehicle frame body of the present application with the longitudinal box beam and the top plate is processed into a highly integrated one-piece structure, without arranging cross beams at the middle of the vehicle structure, thereby effectively reducing the weight of the vehicle frame.

The longitudinal box beams and the top plate enclose to form a hollow cavity for accommodating vehicle-mounted components. By processing the longitudinal box beam and the top plate into a highly integrated one-piece structure, the top plate can directly serve as the floor of the cargo box and replace the function of cross beams, effectively reducing the weight of the vehicle frame.

The top plate can directly serve as the floor of the cargo box, reducing the assembly difficulty between the vehicle frame and the cargo box and simplifying assembly.

The hollow cavity enclosed by the longitudinal box beams and the top plate can be used to accommodate vehicle-mounted components such as power batteries, effectively utilizing the space of the vehicle structure.

Additionally, the hollow cavity of the longitudinal box beam can be used to accommodate vehicle-mounted components such as power batteries. The longitudinal box beam has high strength and can effectively protect the power battery, without an additional protective shell for the power battery. The power battery can be effectively protected by the longitudinal box beam of the vehicle frame. Multiple components do not require redundant thickness design and mass redundancy, greatly reducing the lightweighting difficulty and design cost of commercial vehicle.

By functionally designing the box beam of the vehicle frame and integrating the box beam with the cargo box floor, on one hand, the box beam serves as the cargo box floor, and on the other hand, the box beam serves as the protective shell for components such as batteries, which can significantly reduce the overall mass. It meets the needs of lightweighting and fuel economy. It provides a feasible implementation pathway for achieving carbon neutrality.

It should be understood that the above general description and the following detailed description are exemplary and explanatory only and are not restrictive of the present application. Other aspects may be apparent after reading and understanding the drawings and detailed description.

### BRIEF DESCRIPTION OF DRAWINGS

The drawings herein are incorporated into the specification and constitute a part of the specification, illustrate embodiments consistent with the present application, and are used together with the specification to explain the principles of the present application.
FIG. 1 is a perspective schematic view of a first type of vehicle frame body according to an embodiment of the present application.
FIG. 2 is a front view of FIG. 1.
FIG. 3 to FIG. 5 are front views of the first type of vehicle frame body according to other embodiments of the present application.
FIG. 6 is a front view of a second type of vehicle frame body according to an embodiment of the present application.
FIG. 7 to FIG. 12 are front views of the second type of vehicle frame body according to other embodiments of the present application.
FIG. 13 is a front view of a third type of vehicle frame body according to an embodiment of the present application.
FIG. 14 to FIG. 15 are front views of the third type of vehicle frame body according to other embodiments of the present application.
FIG. 16 is a schematic diagram of a first type of box beam type vehicle frame assembly according to an embodiment of the present application.
FIG. 17 is a schematic diagram of a second type of box beam type vehicle frame assembly according to an embodiment of the present application.
FIG. 18 to FIG. 19 are schematic diagrams of a third type of box beam type vehicle frame assembly according to an embodiment of the present application.
FIG. 20 to FIG. 23 are schematic diagrams of a vehicle according to an embodiment of the present application.
Reference Numerals:
10-longitudinal box beam, 11-bottom beam, 12-side beam, 20-top plate, 21-protrusion portion, 30-hollow cavity, 41-cargo box, 42-power device, 43-driver's cabin, 45-wheel, 46-front and rear axle, 47-leaf spring suspension, 48-electronic control device arrangement box, 49-other device arrangement box, 50-cabin support beam, 51-hollow sub-cavity, 611-wire harness hole, 63-first accommodating structure, 631-first accommodating cavity, 70-second accommodating structure, 701-second accommodating cavity, 71-third accommodating structure, 711-third accommodating cavity, 72-fourth accommodating structure, 721-fourth accommodating cavity, 73-fifth accommodating structure, 731-fifth accommodating cavity, 81-front frame, 82-middle frame, 83-rear frame, 84-front opening, 85-rear opening, 86-cover plate, 87-connecting bracket, 91-bearing portion, 92-goose-neck portion, 100-vehicle frame body, 200-vehicle, X-longitudinal direction, Y-transverse direction.

### DETAILED DESCRIPTION

Embodiments will be described in detail herein, with examples illustrated in the accompanying drawings. When the following description refers to the drawings, unless otherwise indicated, the same numerals in different drawings represent the same or similar elements. The embodiments described in the following examples do not represent all implementations consistent with the present application. Instead, they are merely examples of devices consistent with certain aspects of the present application, as detailed in the appended claims.

The terminology used herein is for the purpose of describing particular embodiments only and is not intended to limit the application. Unless otherwise defined, technical or scientific terms used herein shall have the meanings commonly understood by those skilled in the art. The terms "first," "second," and similar expressions used in the specification and claims of the present application do not denote any order, quantity, or importance, but are merely used to distinguish between different components. Similarly, the terms "a" or "an" do not denote a numerical limitation but indicate the presence of at least one. If it refers to "one" specifically, it will be mentioned separately. The term "plurality" or "several" refers to two or more. Unless otherwise specified, terms such as "front," "rear," "lower," "upper," "top," and "bottom" are used for convenience of description and are not limited to a specific position or spatial orientation. The terms "include," "comprise," or similar expressions indicate that the elements or objects preceding these terms encompass the elements or objects listed thereafter and their equivalents, but do not exclude other elements or objects. The terms "connect," "couple," or similar expressions are not limited to physical or mechanical connections but may include electrical connections, whether direct or indirect.

The singular forms "a," "said," and "the" used in the specification and claims of the present application are also intended to include plural forms, unless the context clearly indicates otherwise. It should also be understood that the term "and/or" as used herein refers to and encompasses any or all possible combinations of one or more associated listed items.

The chassis frame used for commercial vehicles typically adopts bilateral longitudinal beams, with multiple cross beams assembled between the bilateral longitudinal beams by welding or bolts. Due to the arrangement of many cross beams at the middle of the vehicle frame structure, the space at the middle of the vehicle frame is wasted, and the chassis frame is heavy. Moreover, the connection between the vehicle frame and the cargo box involves many parts, has a complex structure, and is difficult to assemble.

Furthermore, commercial vehicle batteries or other components are mounted outside the vehicle frame. Since the components are exposed, their design thickness has certain redundancy to meet safety requirements. The accumulation of redundant thickness designs for multiple components makes it difficult to lightweight the overall commercial vehicle, and every kilogram of lightweighting requires significant design cost.

Aluminum profile extrusion technology is mostly used for components with small cross-sections and long lengths, such as doors and windows. Integrated extrusion molding greatly improves the processing efficiency of components. While meeting strength requirements, hollow design can significantly reduce the mass of components. Therefore, against the background of limited potential for lightweighting existing chassis architectures, developing a new commercial vehicle chassis architecture combined with aluminum profile integrated extrusion molding can achieve the needs of commercial vehicle efficiency, lightweighting, and carbon neutrality.

The present application provides a vehicle frame body, a box beam type vehicle frame assembly, and a vehicle. The vehicle frame body, the box beam type vehicle frame assembly, and the vehicle of the present application will be described in detail below with reference to the drawings. The features in the following embodiments and implementations can be combined with each other without conflict.

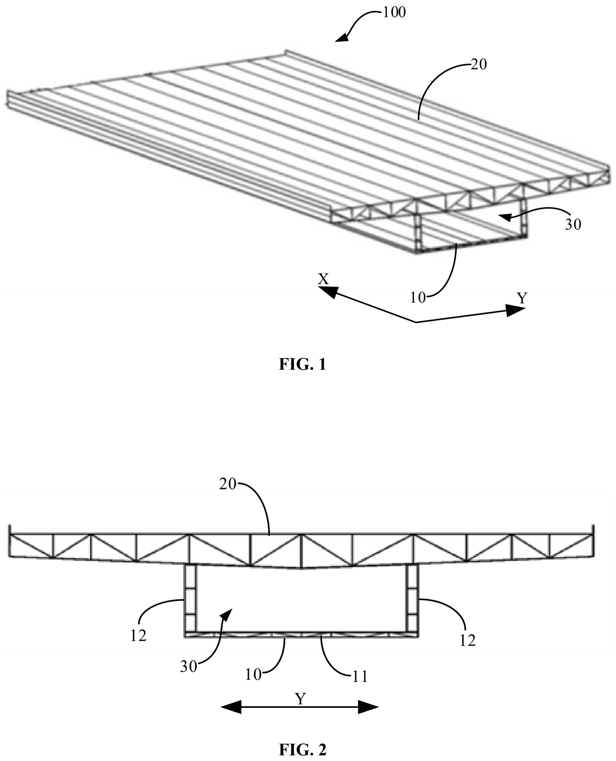

Referring to FIG. 1 and FIG. 2, according to the first aspect of the embodiments of the present application, a vehicle frame body 100 is provided, which can be applied to vehicle frames for automobiles, ship frames, etc. For example, the vehicle frame body can be applied to commercial vehicles such as new energy vehicles or fuel vehicles. Commercial vehicles may include cargo vehicles, trucks, semi-trailer tractors, flatbed trailers, lorries, heavy trucks, light trucks, etc. The vehicle frame body 100 includes: a longitudinal box beam 10 and a top plate 20. The longitudinal box beam 10 and the top plate 20 are a profile integrated structure by extrusion molding. The longitudinal box beam 10 is connected to a lower surface of the top plate 20. The longitudinal box beam 10 and the top plate 20 enclose to form a hollow cavity 30 for accommodating vehicle-mounted components. It can be understood that longitudinal directions X of the longitudinal box beam 10, the top plate 20, and the hollow cavity 30 are consistent with a length direction of the vehicle.

The vehicle frame body 100 of the present application with the longitudinal box beam 10 and the top plate 20 is processed into a highly integrated one-piece structure through profile integrated extrusion processing, without arranging cross beams at the middle of the vehicle frame structure, thereby effectively reducing the weight of the vehicle frame, and meeting the design requirements of the lightweighting trend. The vehicle frame can be used directly without cross beams and bolt assembly, making mounting faster and more efficient. The top plate 20 can directly serve as a floor of the cargo box and can be directly assembled with side panels of the cargo box, simplifying the assembly difficulty between the vehicle frame and the cargo box. The hollow cavity 30 formed by the longitudinal box beam 10 and the top plate 20 can be used to accommodate components such as power batteries for new energy vehicles, effectively utilizing the space of the vehicle structure. It should be noted that the vehicle-mounted components may be devices such as large-capacity power batteries, large-volume liquid fuel tanks, air storage tanks, fuel tanks, batteries, engines, transmissions, arrangement boxes for electronic control devices, arrangement boxes for other functional devices, etc., which are not limited in the application.

In some embodiments, the vehicle frame body 100 may further include cover plates that cover both ends of the hollow cavity 30 in the longitudinal direction X for covering the hollow cavity 30. Thus, after components such as power batteries are placed in the hollow cavity 30 and covered by the cover plates, concealment and sealing can be improved. In some embodiments, the cover plates are aluminum plates connected by welding (e.g., patch welding) to the integrally formed structure formed by the longitudinal box beam 10 and the top plate 20.

In some embodiments, both the longitudinal box beam 10 and the top plate 20 are made of an aluminum alloy material. The longitudinal box beam 10 and the top plate 20 are an integrally formed structure by extrusion molding, that is, the aluminum alloy material is pushed through a die by an extrusion molding process, such that the longitudinal box beam 10 and the top plate 20 form an integrally formed structure. The cross-section of the integrally formed structure in the transverse direction Y that is perpendicular to the longitudinal direction X of the hollow cavity 30 is uniform.

Thus, using the aluminum alloy extrusion molding process to form the longitudinal box beam 10 and the top plate 20 into an integrally formed structure, the extruded integrated aluminum alloy wall and welding aluminum plate form a hollow cavity 30 with a large space, which can serve as a mounting shell for the power battery cells or a mounting shell for liquid fuel tanks such as methanol or gasoline. There is no need to connect the power battery box or fuel tank to the vehicle frame via additionally brackets, effectively avoiding space waste caused by battery mounting and fuel tank mounting. This is equivalent to integrating the vehicle frame longitudinal beam, cargo box floor, and battery pack or fuel tank. The inner wall of the hollow cavity 30 can serve as the outer shell of the liquid fuel tank (or power battery box) of the vehicle, thus combining the cargo box floor, vehicle frame beam, and a shell of the fuel tank or power battery box into one piece. Aluminum alloy materials have the advantages of recyclability and reusability. The extensive use and high integration of aluminum alloy materials, as well as the high integration of the vehicle frame, can effectively reduce the weight of the vehicle frame. At the same time, the layout requirements of large-capacity power batteries and large-volume liquid fuel tanks can be met, the mounting of power batteries or liquid fuel tanks and cargo boxes is reduced, the difficulty of vehicle frame assembly is reduced, the layout space is optimized, the production and assembly process of parts such as the vehicle frame and cargo box are simplified, and costs are reduced. The needs of commercial vehicle frame lightweighting development, market competition cost reduction, production efficiency improvement, carbon neutrality, etc., are met.

In some embodiments, the longitudinal box beam 10 includes a bottom beam 11 and two side beams 12. The bottom beam 11 is below the top plate 20. An end of each of the two side beams 12 is connected to the bottom beam 11, and the other end of the side beam 12 is connected to the top plate 20. Thus, the bottom beam 11, the two side beams 12, and the top plate 20 enclose to form a hollow cavity 30. It can be understood that the bottom beam 11, the two side beams 12, and the top plate 20 are all made of aluminum alloy material and formed into an integrally formed structure through an extrusion molding process. In some embodiments, the two side beams 12 are symmetrically arranged on both sides of the bottom beam 11 in the transverse direction Y. The transverse direction Y is perpendicular to the longitudinal direction (i.e., the longitudinal direction X) of the hollow cavity 30. Thus, the cross-section of the hollow cavity 30 in the longitudinal direction X is quadrilateral. The cross-section is perpendicular to the longitudinal direction of the hollow cavity 30, i.e., perpendicular to the longitudinal direction X of the hollow cavity 30. It can be understood that the quadrilateral structure has good force bearing and high structural strength, which can improve the overall strength of the vehicle frame. In some embodiments, a thickness of the side beam 12 is greater than a thickness of the bottom beam 11, which can improve the load-bearing capacity on both sides of the longitudinal box beam 10.

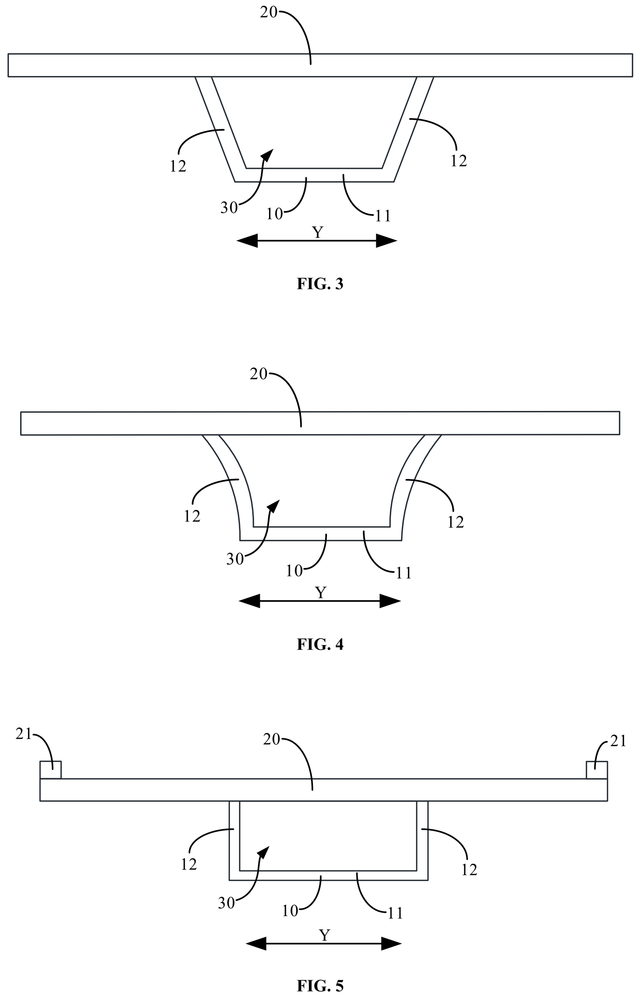

Referring to FIG. 3, in some embodiments, the cross-section of the hollow cavity 30 in the longitudinal direction X may be trapezoidal. The two side beams 12 are symmetrically arranged on both sides of the bottom beam 11 in the transverse direction Y. The length of the upper base of the trapezoidal cross-section is greater than the length of the lower base of the trapezoidal cross-section, making the cross-section of the hollow cavity 30 an inverted trapezoid. It can be understood that the inverted trapezoidal structure has relatively uniform force on both sides, strong load-bearing capacity on the upper surface, and higher structural strength, thereby improving the overall strength of the vehicle frame.

In some embodiments, referring to FIG. 4, the cross-section of each side beam 12 in the longitudinal direction X has at least a portion that is arc-shaped and concaved towards an interior of the hollow cavity 30. It can be understood that the arc-shaped side structure can make the forces on both sides of the bottom beam 11 more uniform, the structural strength higher, and improve the overall strength of the vehicle frame. Moreover, the arc-shaped side structure is more convenient for extrusion processing and molding. In other embodiments, a combination of arc and straight lines may also be used.

Referring to FIG. 5, in some embodiments, an upper top surface of the top plate 20 is provided with a protrusion portion 21 extending in the longitudinal direction X. The protrusion portion 21 is provided with a mounting portion for mounting a cargo box or a cargo box side panel. In some embodiments, both sides of the upper top surface of the top plate 20 are provided with protrusion portions 21 extending in the longitudinal direction X, i.e., the two protrusion portions 21 are on both sides of the upper surface of the top plate 20 in the transverse direction Y. The transverse direction Y is perpendicular to the longitudinal direction X of the hollow cavity 30. It can be understood that the longitudinal box beam 10, the top plate 20, and the two protrusion portions 21 are all made of aluminum alloy material and formed into an integrally formed structure through an extrusion molding process. Thus, in the box beam type vehicle frame assembly of the present application, the top plate 20 can directly serve as the floor of the cargo box and can be directly assembled with the cargo box or the side panels of the cargo box via the protrusion portions 21, reducing the assembly difficulty between the vehicle frame and the cargo box and simplifying the assembly process. In some embodiments, the protrusion portion 21 is provided with a mounting portion for mounting the cargo box. For example, the mounting portion includes structures such as screw holes or mounting slots for mating with the mounting of the cargo box side panels. Thus, the cargo box can be directly mounted on the protrusion portions 21 on both sides of the upper surface of the top plate 20 and assembled with the top plate 20 by bolting or pushing into and engaging with the protrusion portions 21.

In some embodiments, in the longitudinal direction X of the hollow cavity 30, the length of the longitudinal box beam 10 is the same as the length of the top plate 20. Thus, the formed hollow cavity 30 has a longer length and larger space, allowing more components to be placed using the space formed by the hollow cavity 30.

In the transverse direction Y perpendicular to the longitudinal direction X of the hollow cavity 30, the width of the longitudinal box beam 10 is less than the width of the top plate 20. It can be understood that the width of the longitudinal box beam 10 being less than the width of the top plate 20 can leave space for mounting wheels and can also reduce the weight of the vehicle frame.

In the transverse direction Y, the longitudinal box beam 10 is at the middle of the top plate 20. Thus, when power battery components are placed in the hollow cavity 30 formed by the longitudinal box beam 10 and the top plate 20, the weight of the power battery can be maintained at the middle position of the vehicle, making the force of vehicle bearing more balanced, safer, and more reasonable.

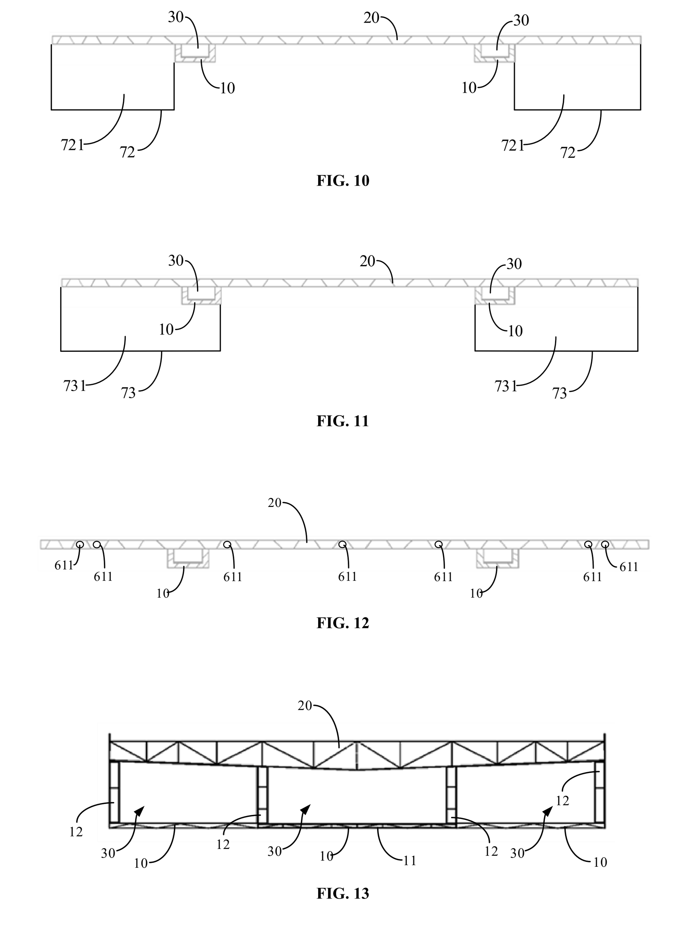

In some embodiments, in the transverse direction Y, a thickness of the top plate 20 gradually decreases from the middle towards both sides. Thus, the top plate 20 can form an equal-stress beam with a cross-section that is thick at the middle and thin at both ends, having a large load-bearing capacity. In some embodiments, the bottom surface of the cross-section of the top plate 20 in the longitudinal direction is arc-shaped (not shown) and concaved towards the interior of the hollow cavity 30, the transverse direction Y is perpendicular to the longitudinal direction X of the hollow cavity 30. Thus, the top plate 20 can form an equal-stress beam with a cross-section that is thick at the middle and thin at both ends, having a large load-bearing capacity. In other embodiments, the top plate 20 can also be provided with multiple reinforcing ribs to enhance the strength and stiffness of the cargo box top plate 20, as shown in FIG. 2. FIG. 13 shows another arrangement of reinforcing ribs. As shown in FIG. 13, each longitudinal box beam 10 is provided with multiple longitudinal reinforcing ribs that are intersected with each other. This makes the force bearing of the longitudinal box beam 10 more reasonable, the strength better, and saves more material. The wall thickness of the longitudinal box beam 10, i.e., the thickness of the side beam 12, can be set to a larger size to improve load-bearing capacity. Reinforcing ribs can also be added inside the longitudinal box beam 10 to serve as the main load-bearing component and mounting base. This is more conducive to mounting structures such as vehicle suspension brackets, cabin suspensions, and other device brackets on both sides of the longitudinal box beam 10.

As shown in FIG. 3 to FIG. 5, in some embodiments, the longitudinal box beam 10 and the top plate 20 are solid structures. Or, as shown in FIG. 1 to FIG. 2, the longitudinal box beam 10 and the top plate 20 are longitudinally hollow multi-hole structures. In some embodiments, at least one of the longitudinal box beam 10 or the top plate 20 is a multi-hole profile structure. It can be understood that at least one of the longitudinal box beam 10 and the top plate 20 can be formed into a corrugated plate-like structure through extrusion molding to strengthen and improve the strength and stiffness of the vehicle frame. Cavity portions can be formed by extrusion molding at inner corner positions of at least one of the longitudinal box beam 10 and the top plate 20. Thus, extruding small cavity portions at the inner corner positions of the aluminum alloy extruded-and-integrally formed vehicle frame can greatly enhance the bending resistance of the vehicle frame.

The inner wall of the hollow cavity 30 may be provided with a guide groove. It can be understood that a groove can be formed at the inner wall of the bottom wall of the hollow cavity 30 corresponding to the longitudinal box beam 10. Thus, components such as power batteries can be pushed into the hollow cavity 30 as a whole through the guide groove for assembly, and then sealed in the hollow cavity 30 by the cover plates.

The vehicle frame body of the present application has the longitudinal box beam 10 and the top plate 20 being formed into an integrated structure through an extrusion molding process. The longitudinal box beam 10 is at the lower surface of the top plate 20, and the longitudinal box beam 10 and the top plate 20 enclose to form a hollow cavity 30 for accommodating vehicle-mounted components. At least part of the inner wall of the hollow cavity 30 can serve as the outer shell of the liquid fuel tank (or power battery box) of the vehicle. In some embodiments, both the longitudinal box beam 10 and the top plate 20 are made of aluminum alloy material. The longitudinal box beam 10 and the top plate 20 are an extruded-and-integrally formed structure, that is, the aluminum alloy material is pushed through a die by an extrusion molding process, such that the longitudinal box beam 10 and the top plate 20 form an integrally formed structure.

Thus, it is possible to form a highly integrated one-piece vehicle frame body while utilizing the vehicle frame space to form the hollow cavity 30 for placing vehicle-mounted components. It can be understood that the cross-section of the integrated vehicle frame molded by aluminum alloy extrusion in the present application is mainly divided into two parts: the longitudinal box beam 10 at the lower side and the top plate 20 at the upper side. According to the requirements of different device sizes, the cross-section of the integrated vehicle frame can be extruded integrally or can be divided into several parts for separate extrusion molding, and then assembled into a whole by connection methods such as snap-fitting, bonding, riveting, etc.

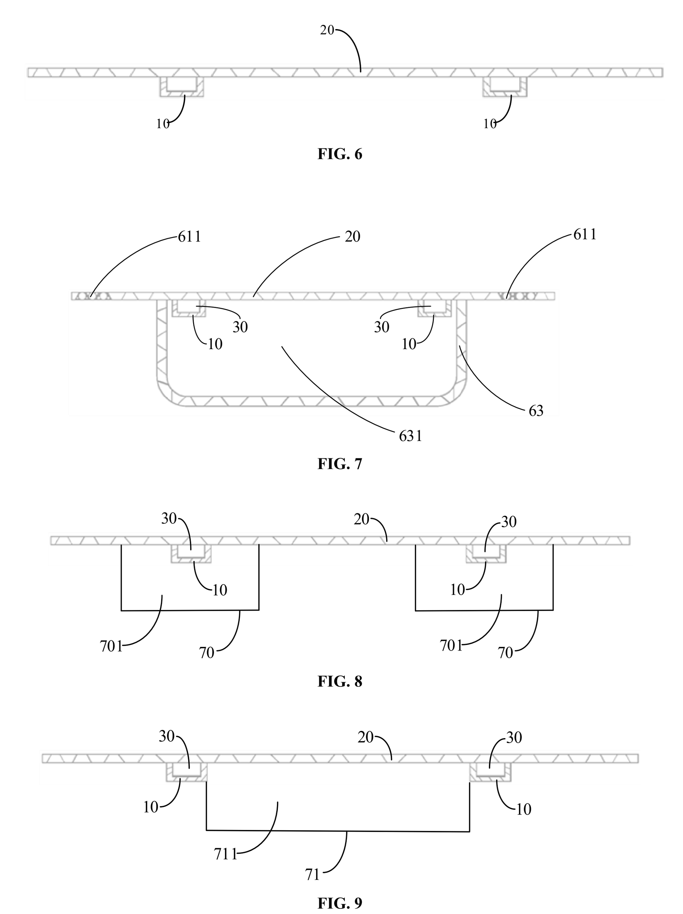

Referring to FIG. 6, according to the second aspect of the embodiments of the present application, there is provided a box beam type vehicle frame, including at least two vehicle frame bodies 100 according to the first aspect described above. The at least two vehicle frame bodies 100 are connected horizontally in the transverse direction Y. The top plates 20 of the at least two vehicle frame bodies 100 are connected into one continuous structure. Or, the at least two vehicle frame bodies 100 are a profile integrated structure by extrusion molding. The longitudinal box beams 10 of the at least two vehicle frame bodies 100 are arranged spaced apart in the transverse direction. Thus, a double-box beam type vehicle frame body is formed, which can be applied to trailer vehicles and has high structural strength.

Referring to FIG. 7, in some embodiments, a bottom portion of the top plate 20 of the box beam type vehicle frame is provided with a first accommodating structure 63. The first accommodating structure 63 is suspended below the longitudinal box beams 10. Both ends of the first accommodating structure 63 in the transverse direction Y are respectively connected to the top plate 20, enclosing to form a first accommodating cavity 631. It can be understood that the first accommodating structure 63 surrounds below the two longitudinal box beams 10 and forms the first accommodating cavity 631 with the top plate 20. The first accommodating cavity 631 can be used to mount other functional modules of the vehicle. The first accommodating structure 63 can be integrally formed with the longitudinal box beam 10 and the top plate 20 and then cut for use in later processing.

The first accommodating structure 63 can also be an extruded-and-integrally formed structure, and then connected and mounted with the vehicle frame body, in this way, excessive subsequent assembly processes can be avoided, thus simplifying the structure of the vehicle frame and shortening the production cycle of the vehicle frame. The cross-section of the first accommodating cavity 631 includes rectangular, circular, rectangular with rounded corners, irregular, etc., which is not limited in this application. The profile structure of the first accommodating structure 63 is solid structure or have cavities. The first accommodating cavity 631 is a cavity with an opening. The opening of the first accommodating cavity 631 facing the top plate 20 cooperates with the bottom surface of the top plate 20 to form a closed cavity.

Referring to FIG. 8, in some embodiments, a bottom portion of each of the at least two longitudinal box beams 10 is individually provided with a second accommodating structure 70 and a second accommodating cavity 701. Both ends of the second accommodating structure 70 are respectively connected to the bottom portion of the top plate 20 on both sides of the longitudinal box beam 10 in the transverse direction Y. It can be understood that one second accommodating structure 70 surrounds below one longitudinal box beam 10 and encloses a second accommodating cavity 701 with the top plate 20. The second accommodating cavity 701 can be used to mount other functional modules of the vehicle. It should be noted that the structure and processing method of the second accommodating structure 70 and the second accommodating cavity 701 can be the same as those of the first accommodating structure 63 and the first accommodating cavity 631, and will not be repeated here.

Referring to FIG. 9, in some embodiments, a bottom portion of the top plate 20 of the vehicle frame body is provided with a third accommodating structure 71. The third accommodating structure 71 is between the two longitudinal box beams 10. Both ends of the third accommodating structure 71 are respectively connected to the side beams 12 of the two longitudinal box beams 10 facing the middle of the top plate 20. The third accommodating structure 71, the side beams 12 of the longitudinal box beam 10, and the top plate 20 constitute a third accommodating cavity 711. The third accommodating cavity 711 can be used to mount other functional modules of the vehicle. It should be noted that the structure and processing method of the third accommodating structure 71 and the third accommodating cavity 711 can be the same as those of the first accommodating structure 63 and the first accommodating cavity 631, and will not be repeated here.

Referring to FIG. 10, in some embodiments, a bottom portion of the top plate 20 of the vehicle frame body is provided with a fourth accommodating structure 72. Both ends of the fourth accommodating structure 72 are respectively connected to the side beam 12 of the longitudinal box beam 10 facing the edge of the top plate 20 and the top plate 20. The fourth accommodating structure 72, the side beam 12 of the longitudinal box beam 10 facing the edge of the top plate 20, and the top plate 20 constitute a fourth accommodating cavity 721. The fourth accommodating cavity 721 can be used to mount other functional modules of the vehicle. It can be understood that an end of the fourth accommodating structure 72 is connected to the side beam 12 of the longitudinal box beam 10 at the outer side (facing the edge of the top plate 20), and the other end of the fourth accommodating structure 72 is connected to the top plate 20, thereby enclosing the fourth accommodating cavity 721. It should be noted that the structure and processing method of the fourth accommodating structure 72 and the fourth accommodating cavity 721 can be the same as those of the first accommodating structure 63 and the first accommodating cavity 631, and will not be repeated here.

Referring to FIG. 11, in some embodiments, the bottom portion of the top plate 20 of the vehicle frame body is symmetrically provided with two fifth accommodating structures 73 and two fifth accommodating cavities 731 in the transverse direction, and they are beside the two longitudinal box beams 10. It can be understood that the two fifth accommodating structures 73 are symmetrically arranged at the bottom portion of the top plate 20 in the transverse direction Y, balancing the force on both sides of the vehicle frame and improving the stability of the vehicle frame. An end of the fifth accommodating structure 73 is connected to the side beam 12 of the longitudinal box beam 10 at the inner side (facing the center of the top plate 20), and the other end of the fifth accommodating structure 73 is connected to the top plate 20, thereby enclosing the fifth accommodating cavity 731. It should be noted that the structure and processing method of the fifth accommodating structure 73 and the fifth accommodating cavity 731 can be the same as those of the first accommodating structure 63 and the first accommodating cavity 631, and will not be repeated here.

Referring to FIG. 12, in some embodiments, the top plate 20 is provided with a plurality of wire harness holes 611 longitudinally. The wire harness holes 611 can be used for arranging vehicle wire harnesses or pipelines. The cross-sectional shape of a wiring harness hole 611 include circular, rectangular, triangular, etc., which is not limited in this application.

Referring to FIG. 13, according to a third aspect of the embodiments of the present application, there is provided a box beam type vehicle frame, including at least three vehicle frame bodies 100 according to the first aspect described above. The longitudinal box beams 10 and top plates 20 of the at least three vehicle frame bodies 100 are connected into one continuous structure in the transverse direction Y. Alternatively, the at least three vehicle frame bodies 100 are a profile integrated structure by extrusion molding. Thus, a multi-box beam type vehicle frame body is formed, which can be applied to vehicles such as trailers, semi-trailers, light trucks, heavy trucks, etc. It can be understood that each of longitudinal box beams 10 of the at least three vehicle frame bodies can form a hollow cavity 30 together with the top plate 20.

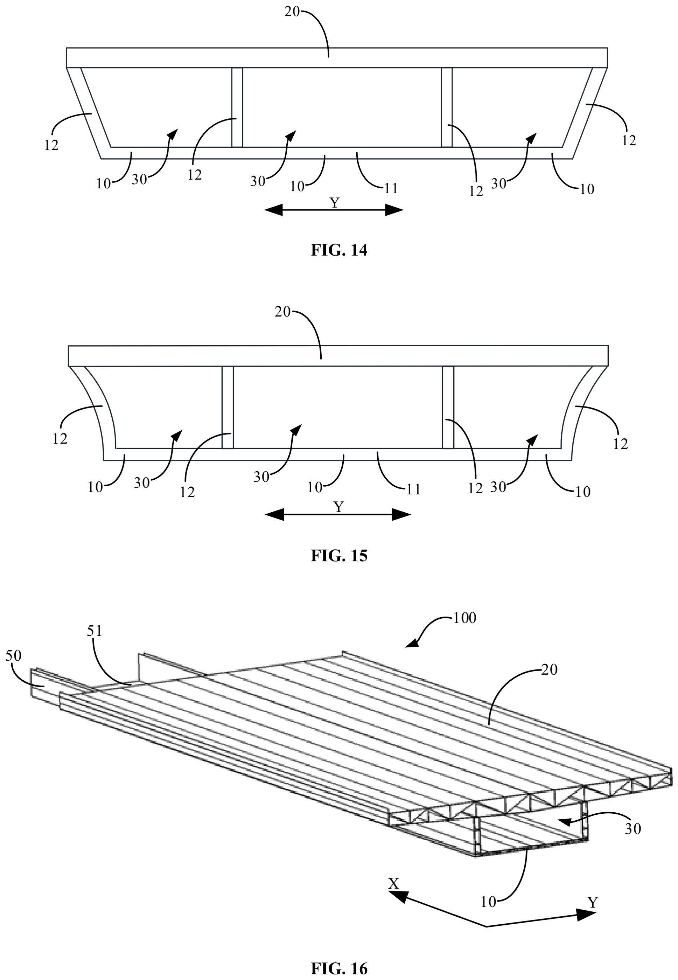

Referring to FIG. 14 and FIG. 15, the longitudinal box beam 10 includes a bottom beam 11 and two side beams 12. An end of each side beam 12 is connected to the bottom beam 11, and the other end of the side beam 12 is connected to the top plate 20. Two adjacent longitudinal box beams 10 share one side beam 12.

In the at least three vehicle frame bodies, two side beams 12 at the outermost sides are symmetrically arranged, as shown in FIG. 14. In this way, the overall shape in the longitudinal direction X formed by the cross-sections of the multiple hollow cavities 30 of the at least three vehicle frame bodies may be trapezoidal. For example, in this embodiment, the two side beams 12 at the outermost sides are inclined relative to the top plate 20 and symmetrically arranged relative to each other, which can make the cross-section of the overall shape formed by the multiple hollow cavities 30 trapezoidal. In some embodiments, the length of the upper base of the trapezoid is greater than the length of the lower base, such that the cross-section of the overall shape formed by the multiple hollow cavities 30 is an inverted trapezoid. The structure of the inverted trapezoid has more uniform stress on both sides, stronger load-bearing capacity on the upper surface, and higher structural strength, thereby improving the overall strength of the chassis frame.

Alternatively, in the east three vehicle frame bodies, at least one side beam 12 is arc-shaped and concaved towards the interior of the hollow cavity 30, as shown in FIG. 15. For example, the cross-sections in the longitudinal direction X of the two side beams 12 located at the outermost sides are arc-shaped. In this way, the arc-shaped side structure results in more uniform stress on both sides, higher structural strength, which can also improve the overall strength of the vehicle frame, and the arc-shaped side structure facilitates extrusion processing and molding.

Referring to FIG. 16, according to a fourth aspect of the embodiments of the present application, there is provided a box beam type vehicle frame assembly, including at least one vehicle frame body according to the first aspect of the embodiments described above. The vehicle frame assembly further includes a cabin support beam 50, where the cabin support beam 50 is connected to the longitudinal box beam 10 of the vehicle frame body in the longitudinal direction X. It can be understood that the cabin support beam 50 may extend beyond the top plate 20 and can be used to mount the cabin of the vehicle.

In some embodiments, the cabin support beam 50 and the vehicle frame body are a profile integrated structure by extrusion molding, and the cabin support beam 50 is a structure formed by partially removing the top plate 20 and part of the longitudinal box beam 10 at the front section of the vehicle frame assembly. In some embodiments, the cabin support beam 50 and the vehicle frame body are a profile integrated structure by extrusion molding, and the cabin support beam 50 is formed by partially removing the top plate 20 at the front section of the vehicle frame assembly. In some embodiments, the cabin support beam 50 and the vehicle frame body are both made of aluminum alloy material. In practice, the top plate 20 and the longitudinal box beam 10 can first be extruded into an integral structure, and then areas of the top plate 20 and the longitudinal box beam 10 corresponding to the cabin of the vehicle (i.e., the front section of the vehicle frame assembly) are cut away to reserve space for mounting the cabin. The area at the front end of the vehicle frame assembly that is cut away exposes a portion extending beyond the top plate 20, thereby forming the cabin support beam 50.

In other embodiments, the cabin support beam 50 is a profile integrated structure by extrusion molding and is connected to the longitudinal box beam 10 via connectors. That is, the top plate 20 and the longitudinal box beam 10 are extruded-and-integrally formed, the cabin support beam 50 is separately extruded-and-integrally formed, and then the cabin support beam 50 and the longitudinal box beam 10 are assembled into a whole by means of snap-fitting, adhesion, riveting, etc.

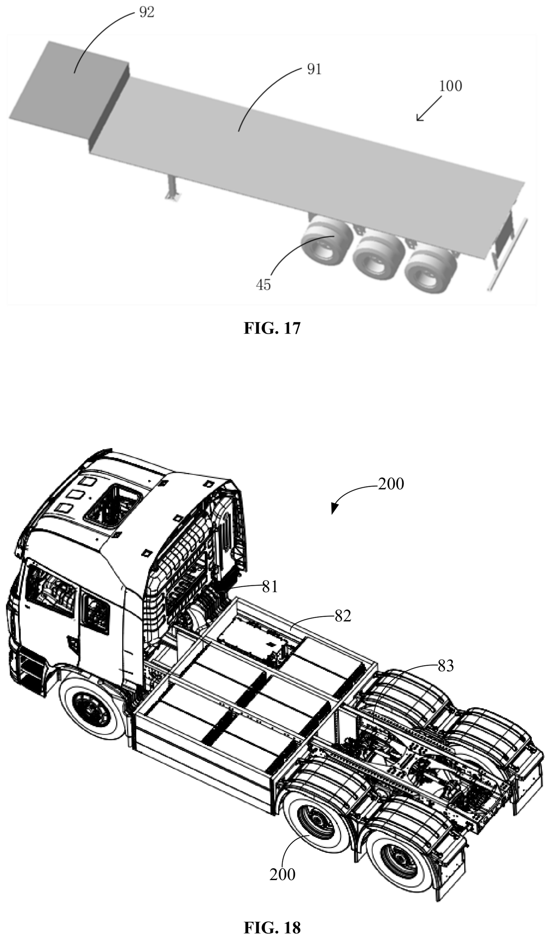

Referring to FIG. 17, according to a fifth aspect of the embodiments of the present application, there is provided a box beam type vehicle frame assembly, including the box beam type vehicle frame according to the second aspect of the embodiments described above. The box beam type vehicle frame constitutes the bearing portion 91 of the vehicle frame assembly, and the front end of the bearing portion 91 is further provided with a goose-neck portion 92. The box beam type vehicle frame assembly of this embodiment can be applied to trailers. The bearing portion 91 can realize the function of cargo bearing, and the goose-neck portion 92 can be used for assembly with vehicle components such as the vehicle head and traction mechanism. The bearing portion 91 is constituted by the box beam type vehicle frame described in the embodiments of FIG. 6 to FIG. 12, and is a profile integrated structure by extrusion molding, avoiding excessive subsequent assembly processes, thus simplifying the structure of the vehicle frame assembly and shortening the production cycle of the vehicle frame assembly.

In the above embodiments, the goose-neck portion 92 can be an extruded-and-integrally formed structure. The extruded-and-integrally formed goose-neck portion 92 can avoid excessive subsequent assembly processes, thus simplifying the structure of the vehicle frame assembly and shortening the production cycle of the vehicle frame assembly. It should be noted that the aforementioned goose-neck portion 92 can also be connected to the bearing portion 91 by means of welding, riveting, snap-fitting, or assembly with connectors. For example, the connectors can be threaded connectors, and an end of the goose-neck portion 92 near the bearing portion 91 is fixed to the bearing portion 91 via the threaded connectors.

In the above embodiments, the goose-neck portion 92 can also be a steel structure, and the steel structure is connected to the bearing portion 91 via standard connectors.

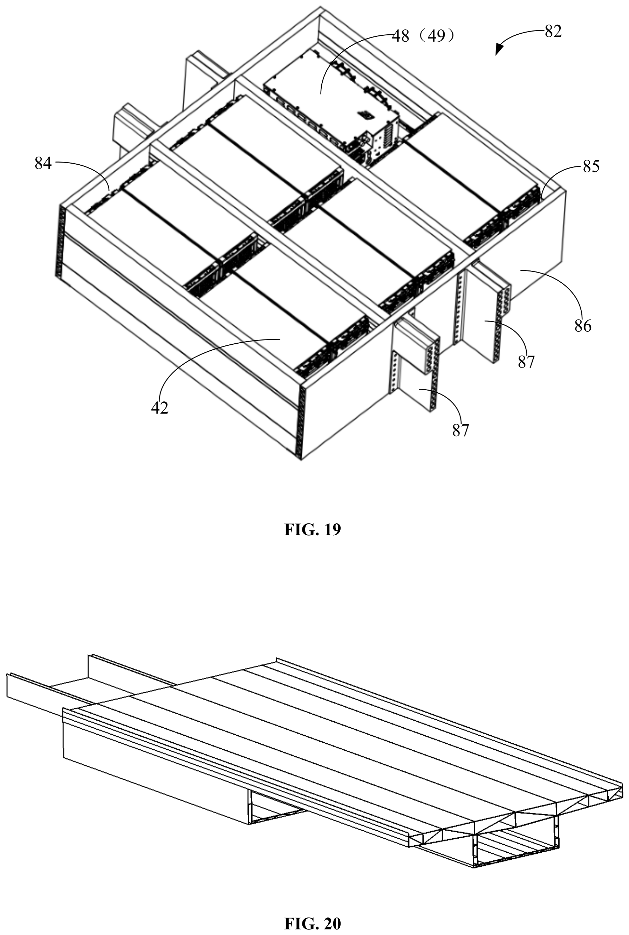

Referring to FIG. 18 and FIG. 19, according to a sixth aspect of the embodiments of the present application, there is provided a box beam type vehicle frame assembly, including a front frame 81, a middle frame 82, and a rear frame 83. The middle frame 82 is constituted by the box beam type vehicle frame according to the third aspect of the embodiments described above.

Referring to FIG. 20, the front frame 81 is a structure formed by partially removing the top plate 20 or the top plate 20 and part of the longitudinal box beams 10 at the front section of the vehicle frame body as shown in FIG. 13. The rear frame 83 is a structure formed by partially removing the outer side beams and bottom beams of two outer longitudinal box beams 10 at the rear section of the vehicle frame body as shown in FIG. 13, retaining only the top plate 20 and the side beams 12 and bottom beams 11 located at the middle. The middle frame 82 maintains the same shape as the vehicle frame body, and the various hollow cavities 30 formed therein can be used to place vehicle-mounted components such as the power device 42, the electronic control device arrangement box 48, and other device arrangement boxes 49. As an implementation, the box beam type vehicle frame assembly can be used for light trucks.

In an embodiment, the front frame 81 and the rear frame 83 are made of steel material, and the middle frame 82 is made of aluminum alloy material. Thus, on one hand, because the front frame 81 and the rear frames 83 are made of steel material, the vehicle frame assembly can adapt to complex driving and transportation conditions. On the other hand, because the middle frame 82 is extruded-and-integrally formed from aluminum alloy, it helps reduce the weight of the vehicle frame assembly. In some embodiments, the front frame 81 and the rear frame 83 can be cast or forged from steel material, respectively, but are not limited thereto.

Referring to FIG. 19, the middle frame 82 may further include cover plates 86 for sealing a front opening 84 and a rear opening 85. By providing the cover plates 86 to cover the front opening 84 and the rear opening 85, the vehicle-mounted components can be better positioned and protected. In some embodiments, the cover plates 86 are fixed to the longitudinal box beam 10 and the top plate 20 of the middle frame 82 by welding or fasteners, but are not limited thereto.

In some embodiments, the middle frame 82 can be fixedly connected to the front frame 81 or the rear frame 83 via a connecting bracket 87. This allows for convenient and reliable fixed connection between the front frame 81 and the middle frame 82 and connection between rear frame 83 and the middle frame 82. In some embodiments, the longitudinal box beam 10 of the middle frame 82 is fixedly connected to the front frame 81 or the rear frame 83 via connecting bracket 87. In another embodiment, the cover plate 86 of the middle frame 82 are fixedly connected to the front frame 81 or the rear frame 83 via the connecting bracket 87.

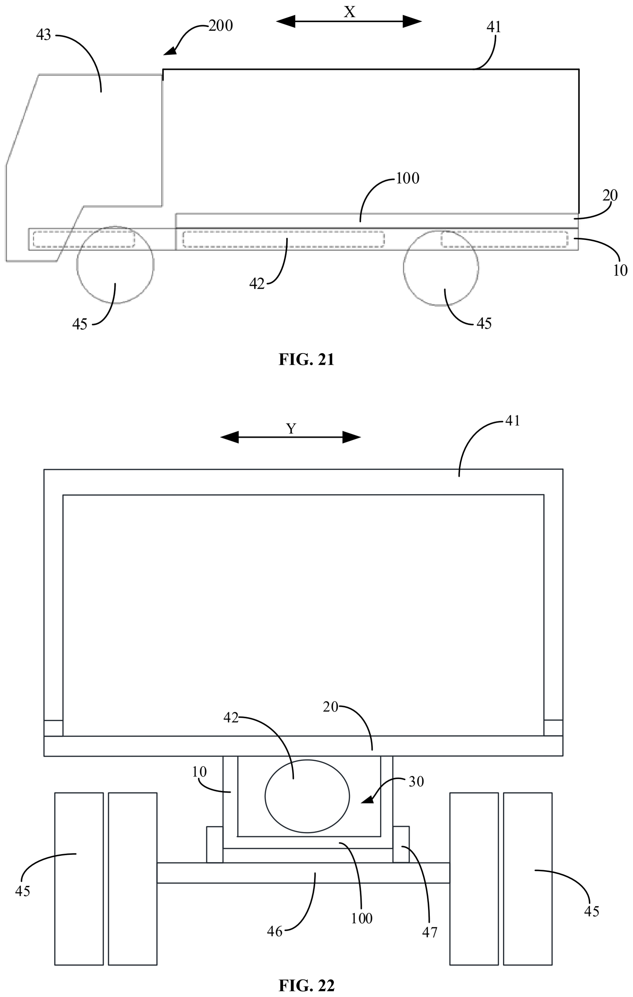

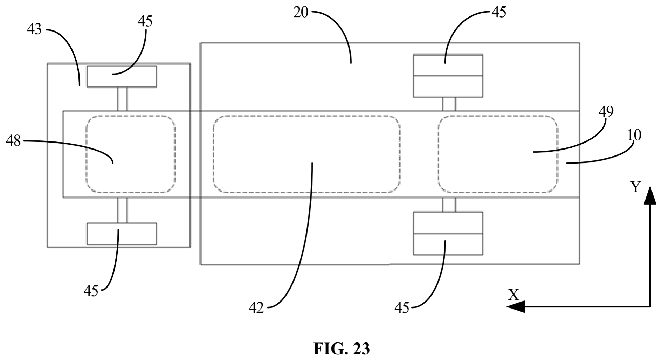

Referring to FIG. 21 to FIG. 23, FIG. 21 shows a side view of a vehicle according to an embodiment of the present application. FIG. 22 shows a rear view of a vehicle according to an embodiment of the present application. FIG. 23 shows a bottom view of a vehicle according to an embodiment of the present application. The embodiments of the present application further provide a vehicle, which can be a light truck equipped with the box beam type vehicle frame assembly according to the fourth aspect of the embodiments described above. The vehicle 200 may further include a cargo box 41 and a power device 42. It can be understood that the longitudinal direction X of the hollow cavity 30 is consistent with the longitudinal direction of the vehicle 200. The power device 42 is mounted within the hollow cavity 30 of the vehicle frame assembly, and the cargo box 41 is mounted on the top plate 20 and assembled with the top plate 20 via the protrusions 21. In some embodiments, the power device 42 may include at least one of a power battery or a fuel tank. In some embodiments, the power battery includes battery cells, and the inner walls of the hollow cavity 30 of the vehicle frame assembly surrounding the battery cells can serve as the outer shell of the power battery. It can be understood that the hollow cavity 30 formed by the longitudinal box beam 10 and the top plate 20 can serve as the outer shell of the power battery (or liquid fuel tank) of the vehicle, thus integrating the cargo box floor, the vehicle frame beam, and the battery outer shell into one continuous structure, realizing product engineering application and a highly integrated frame structure with multi-functional design.

In the vehicle 200 of the present application, the vehicle frame assembly is processed into a highly integrated one-piece structure by integrating the longitudinal box beam 10 and the top plate 20, without arranging cross beams at the middle of the vehicle frame structure, thereby effectively reducing the weight of the vehicle frame and meeting the design requirements of the lightweight trend. The vehicle can be used directly without cross beams and bolt assembly, making mounting faster and more efficient. The top plate 20 can be directly used as the floor of the cargo box and assembled with the side panels of the cargo box, reducing the difficulty of assembling the vehicle frame and the cargo box and simplifying the assembly process. The hollow cavity 30 formed by the longitudinal box beam 10 and the top plate 20 can be used to accommodate components such as the power battery, effectively utilizing the space of the vehicle frame structure.

In some embodiments, the vehicle 200 may further include a driver's cabin 43, wheels 45, a front and rear axle 46, leaf spring suspension 47, an electronic control device arrangement box 48, other device arrangement boxes 49, etc. The driver's cabin 43 is mounted on the cabin support beam 50 of the vehicle frame assembly. The front and rear axle 46 is connected to the longitudinal box beam 10 of the vehicle frame assembly via the leaf spring suspension 47, and the wheels 45 are connected to the front and rear axle 46. Mounting bolts for devices bearing larger loads, such as the leaf spring suspension 47, can be connected using methods such as sleeve-embedded structures. Ordinary connecting bolts can be connected by grooving the inner wall of the longitudinal box beam 10 and welding nuts on the inner side of the outer side wall, or by placing nut plates inside the longitudinal box beam 10 for welding.

Correspondingly, the cabin support beam 50 may have a hollow sub-cavity 51. The electronic control device arrangement box 48 can be mounted in the hollow sub-cavity 51, i.e., in the area corresponding to the front section of the vehicle (i.e., corresponding to the driver's cabin 43). The power device 42 can be mounted in the area of the hollow cavity 30 corresponding to the middle section of the vehicle. Other device arrangement boxes 49 can be mounted in the area of the hollow cavity 30 corresponding to the rear section of the vehicle, making reasonable use of the vehicle's space.

It should be noted that the vehicle can also be a trailer or semi-trailer, equipped with the box beam type vehicle frame assembly according to the fifth aspect of the embodiments described above. The vehicle can also be a heavy truck, equipped with the box beam type vehicle frame assembly according to the sixth aspect of the embodiments described above.

Those skilled in the art will readily contemplate other embodiments of the present application after considering the specification and practicing the application disclosed herein. The application is intended to cover any variations, uses, or adaptive changes of the present application, which follow the general principles of the present application and include common general knowledge or conventional technical means in the art not disclosed in the present application. The description and examples are to be regarded as exemplary only, and the true scope and spirit of the present application are indicated by the following claims.

It should be understood that the present application is not limited to the precise structure that has been described above and illustrated in the drawings, and that various modifications and changes can be made without departing from the scope thereof. The scope of the present application is limited only by the appended claims.

## Claims

1. A vehicle frame body, comprising a longitudinal box beam (10); and a top plate (20);
wherein the longitudinal box beam (10) and the top plate (20) are an integrally formed structure; and
wherein the longitudinal box beam (10) is connected to a lower surface of the top plate (20), and the longitudinal box beam (10) and the top plate (20) enclose to form a hollow cavity (30) for accommodating vehicle-mounted components.

2. The vehicle frame body according to claim 1, wherein the longitudinal box beam (10) comprises a bottom beam (11) and two side beams (12), and for each of the two side beams (12), an end of the side beam (12) is connected to the bottom beam (11), and the other end of the side beam (12) is connected to the top plate (20).

3. The vehicle frame body according to claim 2, wherein the two side beams (12) are symmetrically arranged on both sides of the bottom beam (11) in a transverse direction (Y), and the transverse direction (Y) is perpendicular to a longitudinal direction (X) of the hollow cavity (30).

4. The vehicle frame body according to claim 3, wherein a cross-section of each of the two side beams (12) in the longitudinal direction (X) has at least a portion that is arc-shaped and concaved towards an interior of the hollow cavity (30).

5. The vehicle frame body according to any one of claims 1 to 4, wherein
a cross-section of the hollow cavity (30) in the longitudinal direction (X) is quadrilateral; or
the cross-section of the hollow cavity (30) in the longitudinal direction (X) is trapezoidal, and a length of an upper base of the trapezoid is greater than a length of a lower base of the cross-section.

6. The vehicle frame body according to any one of claims 1 to 5, wherein
an upper top surface of the top plate (20) is provided with a protrusion portion (21) extending longitudinally, and the protrusion portion (21) is provided with a mounting portion for mounting a cargo box or a cargo box side panel; and/or
the upper top surface of the top plate (20) is provided with the protrusion portion (21) extending longitudinally, and the longitudinal box beam (10), the top plate (20), and the protrusion portion (21) are integrally formed by extrusion molding.

7. The vehicle frame body according to any one of claims 1 to 6, wherein in a transverse direction (Y), a thickness of the top plate (20) gradually decreases from middle towards both sides, and the transverse direction being perpendicular to the longitudinal direction (X) of the hollow cavity (30).

8. The vehicle frame body according to any one of claims 1 to 7, wherein the longitudinal box beam (10) and the top plate (20) are both made of aluminum alloy material.

9. The vehicle frame body according to any one of claims 1 to 8, wherein the longitudinal box beam (10) and the top plate (20) are solid structures;
or, the longitudinal box beam (10) and the top plate (20) are longitudinally hollow multi-hole structures.

10. A box beam type vehicle frame, comprising at least two vehicle frame bodies according to any one of claims 1-9 connected horizontally in a transverse direction (Y);
wherein top plates (20) of the at least two vehicle frame bodies are connected into one continuous structure, or, the at least two vehicle frame bodies are an integrally formed structure; and
wherein longitudinal box beams (10) of the at least two vehicle frame bodies are arranged spaced apart in the transverse direction (Y).

11. The box beam type vehicle frame according to claim 10, wherein a bottom portion of the at least two vehicle frame bodies is provided with a first accommodating structure (63), and
the first accommodating structure (63) is suspended below the at least two longitudinal box beams (10), both ends of the first accommodating structure (63) in the transverse direction (Y) are respectively connected to the top plate (20), and enclose to form a first accommodating cavity (631).

12. The box beam type vehicle frame according to claim 10, wherein a bottom portion of each of the at least two longitudinal box beams (10) is individually provided with a second accommodating structure (70) and a second accommodating cavity (701), and
both ends of the second accommodating structure (70) are respectively connected to a bottom portion of the top plate (20) on both sides of the longitudinal box beam (10) in the transverse direction (Y).

13. The box beam type vehicle frame according to claim 10, wherein a bottom portion of the at least two vehicle frame bodies is provided with a third accommodating structure (71), and
both ends of the third accommodating structure (71) are respectively connected to side beams (12) of two longitudinal box beams (10) facing middle of the top plate (20); and the third accommodating structure (71), the side beams (12) of the at least two longitudinal box beams (10), and the top plate (20) form the third accommodating cavity (711).

14. The box beam type vehicle frame according to claim 10, wherein a bottom portion of the top plate (20) is provided with a fourth accommodating structure (72),
both ends of the fourth accommodating structure (72) are respectively connected to a side beam (12) of one of the at least two longitudinal box beams (10) facing an edge of the top plate (20) and the top plate (20), and
the fourth accommodating structure (72), the side beam (12) of the longitudinal box beam (10) facing the edge of the top plate (20), and the top plate (20) form a fourth accommodating cavity (721).

15. The box beam type vehicle frame according to claim 10, wherein a bottom portion of the top plate (20) is symmetrically provided with two fifth accommodating structures (73) and fifth accommodating cavities (731) in the transverse direction (Y), respectively located beside two longitudinal box beams (10).

16. The box beam type vehicle frame according to claim 10, wherein an interior of the top plate (20) is provided with a plurality of wire harness holes (611) or pipeline arrangement holes in the longitudinal direction.

17. A box beam type vehicle frame, comprising at least three vehicle frame bodies according to any one of claims 1-9;
longitudinal box beams (10) and top plates (20) of the at least three vehicle frame bodies are connected into one continuous structure in a transverse direction (Y), or the at least three vehicle frame bodies are an integrally formed structure.

18. The box beam type vehicle frame according to claim 17, wherein for each longitudinal box beam (10), the longitudinal box beam (10) comprises a bottom beam (11) and two side beams (12), an end of one of the two side beams (12) is connected to the bottom beam (11), and the other end of the one of the two side beams (12) is connected to the top plate (20); two adjacent longitudinal box beams (10) share one side beam (12); and
wherein, two side beams (12) located outermost are symmetrically arranged; or
at least one side beam (12) is arc-shaped and concaved towards an interior of the hollow cavity (30).

19. A box beam type vehicle frame assembly, comprising at least one vehicle frame body according to any one of claims 1-9.

20. The box beam type vehicle frame assembly according to claim 19, further comprising a cabin support beam (50), wherein the cabin support beam (50) is connected a longitudinal box beam (10) of the at least one vehicle frame body in the longitudinal direction.

21. The box beam type vehicle frame assembly according to claim 20, wherein the cabin support beam (50) and the at least one vehicle frame body are an integrally formed structure, and the cabin support beam (50) is a structure formed by partially removing the top plate (20) and a part of a longitudinal box beam (10) at a front section of the box beam type vehicle frame assembly.

22. The box beam type vehicle frame assembly according to claim 20, wherein the cabin support beam (50) is an integrally formed structure and is connected to the longitudinal box beam (10) via a connector.

23. A box beam type vehicle frame assembly, comprising the box beam type vehicle frame according to any one of claims 10-16, wherein the box beam type vehicle frame constitutes a bearing portion (91) of the vehicle frame assembly, and a goose-neck portion (92) is further provided at a front section of the bearing portion (91).

24. The box beam type vehicle frame assembly according to claim 23, wherein the goose-neck portion (92) is an integrally extruded formed structure.

25. The box beam type vehicle frame assembly according to claim 23, wherein the goose-neck portion (92) is a steel structure, and the steel structure is connected to the bearing portion (91) via standard connectors.

26. A box beam type vehicle frame assembly, comprising a front frame, a middle frame, and a rear frame; wherein the middle frame is constituted by the box beam type vehicle frame according to any one of claims 17-18.

27. The vehicle frame assembly according to claim 26, wherein the front frame is a structure formed by partially removing a top plate (20) and a part of a longitudinal box beam (10) at a front section of the box beam type vehicle frame; and
the rear frame is a structure formed by partially removing outer side beams (12) and bottom beams (11) of two longitudinal box beams (10) located at outer sides, and retaining the top plate (20) and two side beams (12) and a bottom beam (11) located at middle.

28. The vehicle frame assembly according to claim 26, wherein the front frame and the rear frame are made of steel material, and the middle frame is made of aluminum alloy material.

29. The vehicle frame assembly according to claim 26, wherein the middle frame further comprises cover plates for covering a front opening and a rear opening.

30. A vehicle being a light truck, wherein the light truck is provided with the vehicle frame assembly according to any one of claims 19-22.

31. A vehicle being a trailer or a semi-trailer, wherein the trailer or semi-trailer is provided with the vehicle frame assembly according to any one of claims 23-25.

32. A vehicle being a heavy truck, wherein the heavy truck is provided with the vehicle frame assembly according to any one of claims 26-29.
